# EUROPEAN PATENT SPECIFICATION

(11) **EP 2 168 431 B1**
(45) Date of publication and mention of the grant of the patent: **10.07.2013**
(21) Application number: 09252280.4
(22) Date of filing: 25.09.2009
(51) Int. Cl.: A01K 91/06, A01K 97/02

(54) **A feeder for feeding bait to fish during fishing with an elastic material**
Füttereinrichtung zur Fütterung eines Köders an Fische während des Angelns mit einem elastischen Material
Dispositif d'alimentation d'appâts pour poissons pendant la pêche avec un matériau élastique

(30) Priority: 26.09.2008 GB 0817698; 16.03.2009 GB 0904505
(43) Date of publication of application: 31.03.2010
(73) Proprietor: Korda Developments LTD, Basildon, Essex SS14 3DA (GB)
(72) Inventor: Bones, Alexander, Richard, Allesley, Coventry CV5 7QB (GB); Clarke, Damian, Keith, Colchester, Essex CO3 9TH (GB); Penning, Adam, Heathcote, Chelmsford, Essex CM1 2EX (GB)
(74) Representative: Jones, Graham Henry

(56) References cited:
- GB-A- 1 561 842
- GB-A- 2 309 146
- GB-A- 2 419 266

## Description

This invention relates to a feeder with elastic material and for feeding bait to fish during fishing.

There are various types of known feeders for feeding bait to fish during fishing. One known feeder comprises a feeder body for receiving the bait, and a length of elastic material which forms an elastic connection between a reel line on a reel, and a hook line on a hook. The length of the elastic material is advantageous in cushioning the effect of a hooked fish by minimising pressure on the reel line and the hook line, thereby preventing reel line breakages, hook line breakages and hooks pulling out of fish, which result in lost fish. A first end of the length of elastic material is tied to a frame part of the feeder body. A second end of the length of elastic material is connected to the hook line via connector means in the form of a ring.

Whilst the above mentioned known feeder is advantageous in its use of the length of the elastic material to minimise on lost fish, the known feeder suffers from a problem. More specifically, because the first end of the length of the elastic material is tied to the frame part of the feeder body, if the reel line breaks with a fish being hooked, then the hooked fish escapes but has to drag with it the hook line, the feeder body and the length of the elastic material. This is clearly undesirable for the fish.

GB-A-2309146 discloses a feeder for feeding bait to fish during fishing, which feeder comprises a feeder body for receiving the bait, conduit means on the feeder body, a length of elastic material in the conduit means, first connector means which is positioned at a first end of the conduit means and which is for connecting a first end of the length of elastic material to a reel line on a reel, and second connector means which is positioned at a second end of the conduit means and which is for connecting a second end of the length of elastic material to a hook line on a hook. The first connector means is a loop which is located outside the first end of the conduit means.

It is an aim of the present invention to reduce the above mentioned problem, whilst at the same time enabling the feeder to be connected quickly and easily to a reel line on a reel.

Accordingly, the present invention provides a feeder for feeding bait to fish during fishing, which feeder comprises a feeder body for receiving the bait, conduit means on the feeder body, a length of elastic material in the conduit means, first connector means which is positioned at a first end of the conduit means and which is for connecting a first end of the length of elastic material to a reel line on a reel, and second connector means which is positioned at a second end of the conduit means and which is for connecting a second end of the length of elastic material to a hook line on a hook, and the feeder being characterized in that:
(i) the first connector means is located inside the first end of the conduit means, and is not removable from the conduit means through the first end of the conduit means;
(ii) the first connector means is removable from the conduit means through the second end of the conduit means; and
(iii) the first connector means extends from inside the first end of the conduit means to beyond the first end of the conduit means.

The feeder of the present invention is firstly advantageous in that, if the reel line should break, the fish will escape but will only be towing the hook line, the first and second connector means and the length of elastic material. The bulky and weighty feeder body will not have to be towed by the fish. The feeder of the present invention is secondly advantageous in that the extension of the first connector means to beyond the first end of the conduit means enables the first connector means to be readily available for quick and easy connection to the reel line of the reel.

The feeder may be one in which the first connector means comprises a first connector portion located inside the first end of the conduit means, and a second connector portion located outside the first end of the conduit means; in which the second connector portion is connected to the reel line; in which the first connector portion is connected to the first end of the length of the elastic material; and in which the first end of the conduit means includes a restrictor formation which prevents the first connector portion from being pulled through the first end of the conduit means.

The restrictor formation may be an internal abutment means. The internal abutment means may be an internal collar. Other types of internal abutment means may be employed. The restrictor formation may alternatively be an inwardly directing wall formation of the first end of the conduit means. Other types of restrictor formation may be employed.

The first connector portion is preferably a ring portion. Other types of first connector portions may be employed.

The second connector portion is preferably a slotted portion. Other types of second connector portion may be employed.

Preferably, the conduit means is a tube which extends longitudinally of the feeder body. Other types of conduit means may be employed. Preferably, the feeder is one in which the tube is slideably mounted on the feeder body such that the tube is removable from the feeder body. The tube can then be used with different feeder bodies of different shapes and/or weights. The tube may be a sliding fit through a pair of locating ring members on the feeder body.

The feeder may be on in which the second connector means is of a size which prevents the second connector means from passing into the conduit means from the second end of the conduit means. Alternatively, the second connector means may be of a size which is able to pass into the conduit means from the second end of the conduit means.

The feeder may be one in which the second connector means is a ring. Other types of second connector means may be employed.

The second end of the conduit means may be provided with an external reinforcing formation. The external reinforcing formation is preferably an external collar but other types of reinforcing formations may be employed such for example as external ribs.

Preferably, the length of the elastic material is a length of hollow elastic material. Also preferably, the length of hollow elastic material is filled with a liquid. The liquid-filled length of hollow elastic material then has Hydrolastic (Trade Mark) properties. If desired, the length of the hollow elastic material may be unfilled. Alternatively, the length of the elastic material may be a length of a solid elastic material, i.e. a length of elastic material that is not hollow.

The feeder body may be of any suitable and appropriate shape. The feeder body may be made of known materials and it will usually be made of a plastics material. The tube is preferably made of a plastics material but it may be made of other materials if desired. The first connector means may be made of metal, for example wire. The first connector means may alternatively be made of a plastics material. The second connector means may be made of metal or a plastics material. The bait used in the feeder may be wet and/or dry bait.

Embodiments of the invention will now be described solely by way of example and with reference to the accompanying drawings in which:
Figure 1 shows a known feeder for feeding bait to fish during fishing;
Figure 2 shows a first feeder of the present invention for feeding bait to fish during fishing;
Figure 3 shows a second feeder of the present invention;
Figure 4 shows a third feeder of the present invention;
Figure 5 shows how a length of elastic material in the feeder of the present invention extends to the front with a hooked fish;
Figure 6 shows how a feeder of the present invention is subjected to a force at its rear end during casting;
Figure 7 shows part of another feeder of the present invention;
Figure 8 shows in more detail first connector means shown in Figure 7;
Figure 9 shows the connector means of Figure 8 but in an open condition;
Figure 10 shows a design for conduit means forming part of the feeder of the present invention;
Figure 11 shows a design for first connector means, a length of elastic material and second connector means as used in a feeder of the present invention;
Figures 12, 13 and 14 show first and second connector means with different grades of lengths of elastic material;
Figure 15 shows a length of elastic material;
Figure 16 shows an end profile of the length of elastic material as shown in Figure 15;
Figure 17 shows how the length of elastic material of Figures 15 and 16 is tied to first connector means;
Figure 18 shows how a second end of the length of elastic material shown in Figures 15 and 16 is tied to second connector means;
Figure 19 shows another design for first and second connector means, with a cover over the first connector means;
Figure 20 shows another design for first and second connectors; and
Figures 21 and 22 show in enlarged form parts of Figure 20.

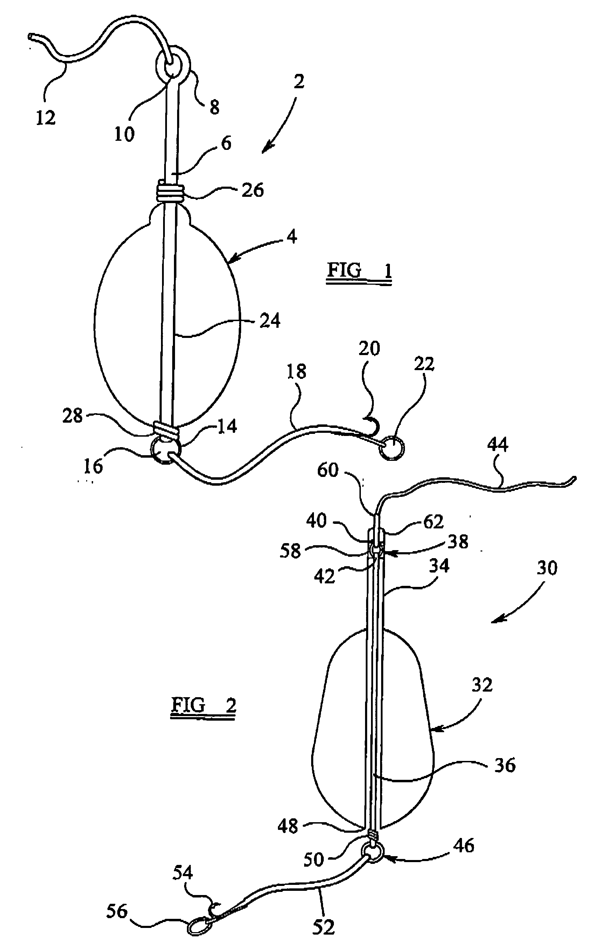

Referring to Figure 1, there is shown a feeder 2 for feeding bait to fish during fishing. The feeder 2 comprises a feeder body 4 for receiving the bait. The feeder body 4 has a moulded frame part 6. The frame part 6 has an end 8 having an aperture 10 by which the frame part 6 is connected to a reel line 12 connected to a reel (not shown). The feeder 2 has a ring 14 having an aperture 16 and which is connected to a hook line 18. The hook line 18 has a hook 20 and a hair and hair loop 22. The hook line 18 may be used without a hair and hair loop 22, i.e. just with the hook line 18 and the hook 20.

The feeder 2 has a length of elastic material 24. A first end 26 of the length of elastic material 24 is tied as shown to the frame part 6. A second end 28 of the length of elastic material 24 is tied as shown to the ring 14. If a fish is hooked, the length of elastic material is advantageous in that it minimizes pressure from the fish on the reel line 12, the hook line 18 and also on the hook 20. Pressure on the reel line 12 and the hook line 18 may cause these lines to break. Pressure on the hook 20 may cause the hook to pull out of the fish with the result that the fish is lost. The use of the length of the elastic material 24 is thus advantageous. However, the feeder 2 does have a problem in that, if the reel line 12 breaks whilst a fish is hooked on the hook 20, then the fish escapes but has to drag with it the hook line 18 and the entire feeder 2. This is because the first end 26 of the length of elastic material 24 is tied to the frame part 6 of the feeder body 4. The weight of the feeder body 4 could kill the fish, for example by dragging it to the bottom of a river or lake.

Referring now to Figure 2, there is shown a feeder 30 of the present invention. The feeder 30 is for feeding bait to a fish during fishing. The feeder 30 comprises a feeder body 32 for receiving the bait. Conduit means 34 extends through the feeder body 32 as shown. A length of elastic material 36 is in the conduit means 34.

First connector means 38 is positioned at a first end 40 of the conduit means 34. The first connector means 38 is for connecting a first end 42 of the length of the elastic material 36 to a reel line 44 on a reel (not shown).

Second connector means 46 is positioned at a second end 48 of the conduit means 34. The second connector means 46 is for connecting a second end 50 of the length of elastic material 36 to a hook line 52. The hook line 52 has a hook 54 and a hair and hair loop 56. The hook line 52 may be used without the hair and hair loop 56, i.e. just with the hook line 52 and the hook 54.

The feeder 30 is such that the first connector means 38 is located as shown inside the first end 40 of the conduit means 34. The first connector means 38 is not removable from the conduit means 34 through the first end 40 of the conduit means 34.

The first connector means 38 is removable from the conduit means 34 through the second end 48 of the conduit means 34.

The second connector means 46 is of a size which prevents the second connector means 46 from passing into the conduit means 34 from the second end 48 of the conduit means 34. In an alternative construction (not shown) the second connector means 46 could be of a size which enables it to pass into the conduit means 34.

The conduit means 34 is a tube which extends longitudinally of the feeder body 4. The conduit means 34 is preferably a removable sliding friction fit in the feeder body 4, but the conduit means may alternatively be permanently secured to the feeder body 4 if desired.

The first connector means 38 comprises a first connector portion 58 located inside the first end 40 of the conduit means 34, and a second connector portion 60 located outside the first end 40 of the conduit means 34. The reel line 44 is simply and quickly tied, hooked or otherwise connected to the second connector portion 60. This enables faster fishing in that when a first feeder of the invention has been loaded with bait, cast and finished its fishing cycle, a pre-loaded second feeder of the invention can quickly be substituted for the first feeder and fishing re-commenced.

The first connector portion 58 is connected to the first end 42 of the length of elastic material 36. The first end 40 of the conduit means 34 includes a restrictor formation 62 which prevents the first connector portion 58 from being pulled through the first end 40 of the conduit means 34. The restrictor formation 62 is in the form of an internal abutment means, with the internal abutment means being in the form of an internal collar as shown.

The first connector portion 58 is a ring portion.

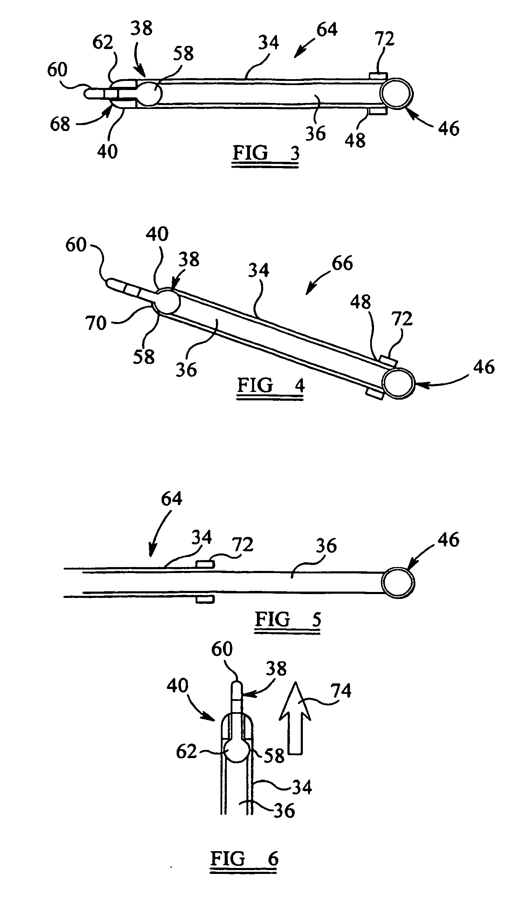

Figure 3 shows a part 64 of a feeder. Figure 4 shows a part 66 of a feeder. Similar parts as in the feeder 2 have been given the same reference numerals for ease of comparison and understanding. In Figure 3, the conduit means 34 has a restrictor formation 68 which is like the restrictor formation 62. In Figure 4, the conduit means 34 has a restrictor formation 70 which is formed by an inwardly directed wall portion of the first end 40 of the conduit means 34. In both Figures 3 and 4, the conduit means 34 have second ends 48 provided with an external reinforcing formation 72. As shown, the external reinforcing formation 72 is an external collar.

Figure 5 shows the front right hand end of the feeder 64 and illustrates how the second connector means 46 and the length of elastic material 36 are pulled out of the second end 48 of the conduit means when a fish is hooked. The stretching of the elastic material 36 minimises pressure on the reel line 44 and the hook line 52, thereby helping to prevent these lines breaking under force from the fish and the angler. The stretching of the length of elastic material 36 also helps to prevent the hook 54 pulling out of the fish and the fish escaping. In the event that the reel line 44 should break, then the fish pulls the second connector means 46, the length of elastic material 36 and the first connector means 38 away from the conduit means 34 and the feeder body 32. Thus the fish does not have to take with it the feeder body 32 and the conduit means 34, and thus the fish has a much better chance of surviving than if it were towing the feeder body 32 and the conduit means 34.

Figure 6 illustrates by arrow 74 the force that exists at the first end 40 during casting with a fishing rod or pole (not shown).

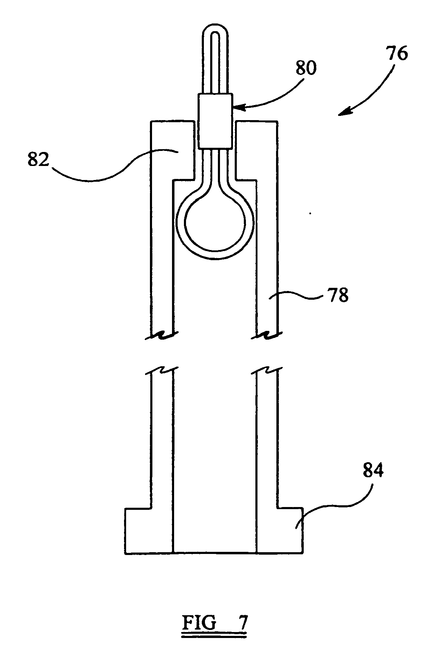

Figure 7 shows in detail part of a feeder 76 having conduit means 78, first connector means 80, an internal restrictor formation 82 and an external reinforcing formation 84.

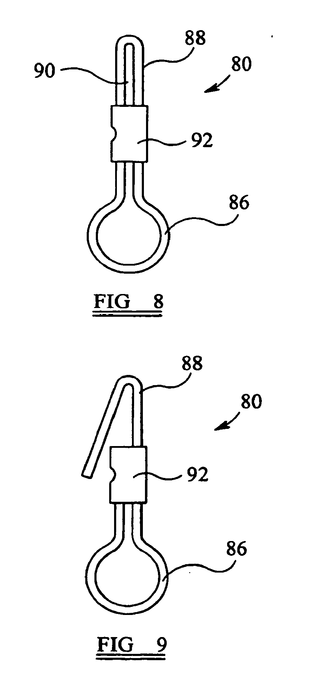

Figure 8 and 9 show in more detail the first connector means 80 shown in Figure 7. More specifically, the first connector means 80 comprises a first connector portion 86 in the form of a ring and a second connector portion 88 which is a slotted second connector portion 88 having a slot 90. Figure 9 shows how the second connector portion 86 may be formed of wire which is bent and located into a holder portion 92.

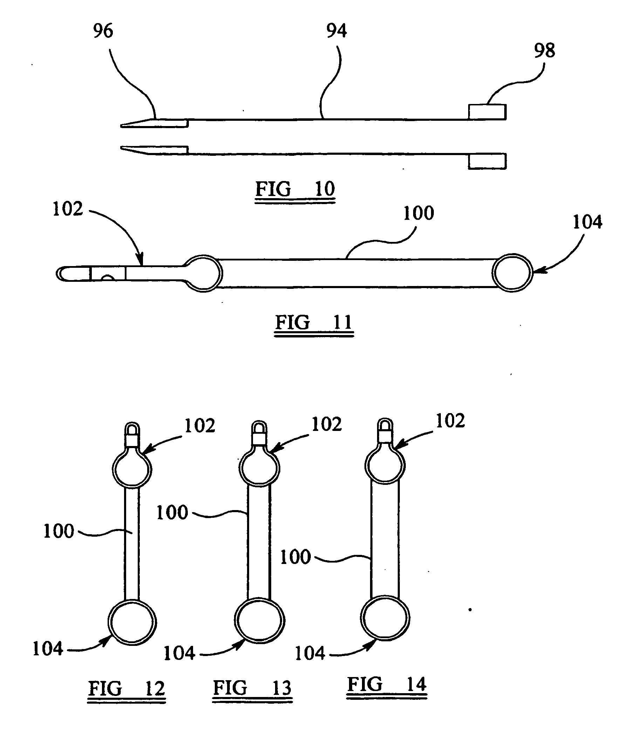

Figure 10 shows conduit means 94 having a restrictor formation 96 and an external reinforcing formation 98. The conduit means 94 may be provided with the components shown in Figure 11. More specifically, Figure 11 shows a length of elastic material 100 having first connector means 102 and second connector means 104.

Figure 12 shows components like Figure 11. In Figure 12, the length of elastic material 100 as a light grade, and in order to indicate this, it may be appropriately coloured, for example white or grey. Figure 13 shows the length of elastic material 100 as a medium grade, and in order to indicate this, it may be appropriately coloured, for example black. Figure 14 shows the length of elastic material 100 as a heavy grade, and in order to indicate this, it may be appropriately coloured, for example purple or red.

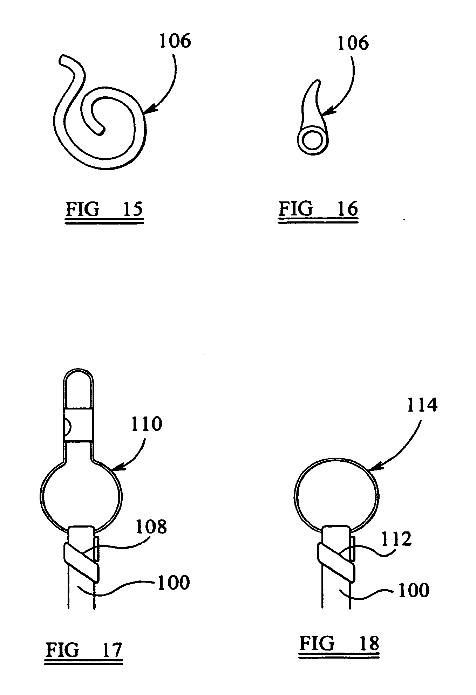

Figures 15 and 16 show a length of elastic material 106. Figure 17 shows how a first end 108 of the length of elastic material 100 is tied to first connector means 110. Figure 18 shows how a second end 112 of the length of elastic material 100 is tied to second connector means 114.

It can be seen from Figure 16 that the length of elastic material 106 is tubular and is hollow. The hollow elastic material may be filled with a liquid, giving Hydrolastic properties. Alternatively, the length of the hollow elastic material 106 can be unfilled. Alternatively the length of the elastic material may be a length of solid elastic material.

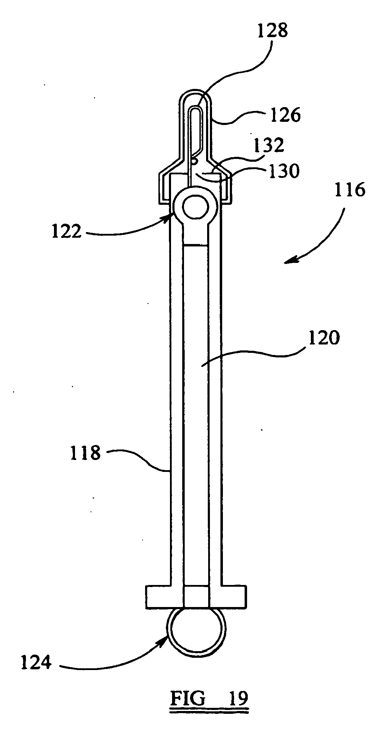

Figure 19 shows an arrangement 116 comprising conduit means 118 in the form of a plastics tube. The conduit means 118 contains a length of elastic material 120. One end of the length of elastic material 120 is connected to first connector means 122, and the other end of the length of elastic material 120 is connected to second connector means 124. The second connector means 124 is in the form of a ring, for example made of black nickel. Other materials may be employed.

The arrangement 116 has a cover 126 which is tapered as shown and which fits over the end of the conduit means 118 in order to protect a hooked portion 128 of the first connector means 122 extending through an aperture 130 in an end 132 of the conduit means 118.

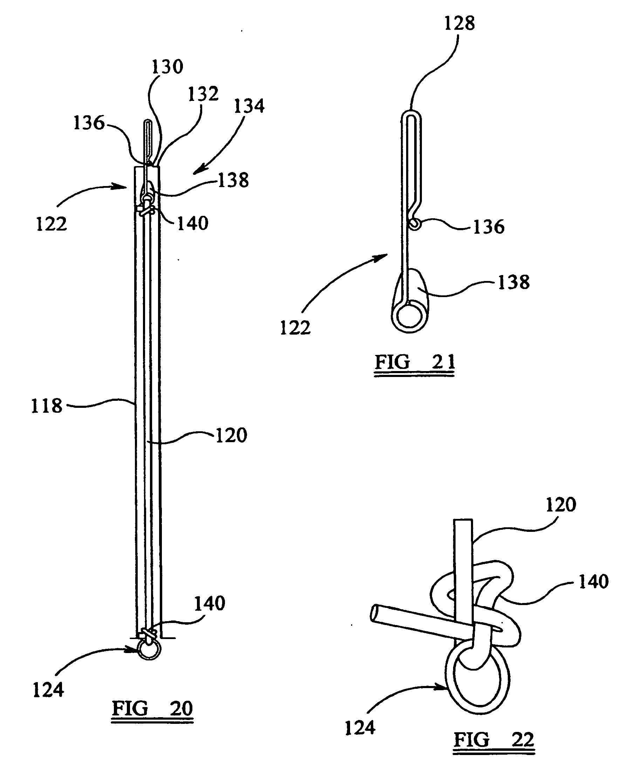

Figures 20 - 22 show an arrangement 134 which is like the arrangement 116 shown in Figure 19. Similar parts have been given the same reference numerals for ease of comparison and understanding. Figures 20 and 21 show in more detail the first connector means 122. Figures 20 and 22 show in more detail how the length of elastic material 120 is connected by knots to the first and second connector means 122, 124 respectively. The arrangement 134 can be used with or without the cover 126. The cover 126 may be made of a rubber material. Other materials such for example as plastics materials may be employed. The shape of the cover 126 may be different from that shown in Figure 19.

Figure 21 also shows how the first connector means 122 is provided with plastics over moulded portions 136, 138. The shape of these plastics over moulded portions may be different from those shown. Figure 22 illustrates a knot 140 that may be employed at both ends of the length of elastic material 120.

The feeders of the present invention as shown in Figures 2 - 22 are advantageous in that the feeder bodies will be allowed to fall to a lake or river bed if the fishing line above the feeder breaks, thereby ensuring that the fish is not attached to the feeder without the angler also being in contact. The lengths of elastic material are removable, allowing an angler to change the length of elastic material whilst on a bank in a fishing situation. Various lengths of elastic material may be employed, for example from 0.5 inches - 12 inches (1.27cm - 30.48cm). Because the length of elastic material can easily be removed whilst in use, different grades or lengths of elastic materials can easily be changed. This offers an angler a safe, tailored elastication set-up in order to suit the requirements of any given occasion. The first connector means shown in the drawings allows quick and easy attachment of the angler's reel line to the feeder. The part of the reel line attaching to the first connector means may in all feeders of the present invention be provided with a cover, for example made of a rubber or a plastics material. The cover may be a small frusto-conical cover. The feeder of the present invention is able to use longer lengths of elastic material than in the known feeder, because the conduit means is able to extend beyond one or both ends of the feeder body as can be appreciated from Figure 2. The use of the longer lengths of the elastic material may give increased stretch and cushioning. The use of the conduit means may give a stem to the feeder of the present invention, thereby aiding stability in flight and accuracy of casting. The feeder of the present invention promotes fish welfare and safety. The housing of the length of the elastic material in the conduit means helps to prevent the length of elastic material becoming damaged, for example from exposure to bait oils and/or underwater obstacles. Various lengths of elastic material may be sold to anglers separately. These lengths of spare elastic material may be supplied with first and second connector means already attached. Preferably, the various lengths of elastic material will be in predetermined sizes between 0.5 inches and 12 inches in length. The conduit means may be provided in various lengths to enable an angler to cut it to a desired size. The conduit means may advantageously be removable from the remainder of the feeder of the present invention in order to allow quick changing of the conduit means and/or the elastic material in the conduit means.

It is to be appreciated that the embodiments of the invention described above with reference to the accompanying drawings have been given by way of example only and that modifications may be effected. Thus, for example, the feeder of the present invention may have any suitable and appropriate feeder body. The conduit means 34 may alternatively be a tube which is mounted on top of the feeder body 34. In this case, the conduit means 34 may be fixed but it is preferably a sliding fit which can be removed from the feeder body 34 such that the tube can be used with different feeder bodies of different shapes and/or weights. The feeder may be made of any suitable and appropriate materials. The bait may be wet and/or dry bait.

## Claims

1. A feeder (30) for feeding bait to fish during fishing, which feeder (30) comprises a feeder body (32) for receiving the bait, conduit means (34) on the feeder body (32), a length of elastic material(36) in the conduit means (34);
first connector means (38) which is positioned at a first end (40) of the conduit means (34) and which is for connecting a first end (42) of the length of elastic material (36) to a reel line (44) on a reel, and second connector means (46) which is positioned at a second end (48) of the conduit means (34) and which is for connecting a second end (50) of the length of elastic material (36) to a hook line (52) on a hook (54), and the feeder (30) being characterised that:
(i) the first connector means (38) is located inside the first end (40) of the conduit means(34), and is not removable from the conduit means (34) through the first end (40) of the conduit means (34);
(ii) the first connector means (38) is removable from the conduit means (34) through the second end (48) of the conduit means (34); and
(iii) the first connector means (38) extends from inside the first end (40) of the conduit means (34) to beyond the first end (40) of the conduit means (34).

2. A feeder (30) according to claim 1 in which the first connector means (38) comprises a first connector portion (58) located inside the first end (40) of the conduit means (34), and a second connector portion (60) located outside the first end (40) of the conduit means (34); in which the second connector portion (60) is connected to the reel line (44); in which the first connector portion (58) is connected to the first end (42) of the length of elastic material (36); and in which the first end (40) of the conduit means (34) includes a restrictor formation (62) which prevents the first connector portion (58) from being pulled through the first end (40) of the conduit means (34).

3. A feeder (30) according to claim 2 in which the restrictor formation (62) is an internal abutment means.

4. A feeder (30) according to claim 3 in which the internal abutment means is an internal collar.

5. A feeder (30) according to claim 2 in which the restrictor formation (62) is an inwardly directed wall formation of the first end (40) of the conduit means (34).

6. A feeder (30) according to any one of claims 2 - 5 in which the first connector portion (58) is a ring portion.

7. A feeder (30) according to any one of claims 2 - 6 in which the second connector portion (60) is a slotted portion.

8. A feeder (30) according to any one of the preceding claims in which the conduit means (34) is a tube which extends longitudinally of the feeder body (32).

9. A feeder (30) according to claim 8 in which the tube is slideably mounted on the feeder body (32) such that the tube is removable from the feeder body (32).

10. A feeder (30) according to any one of the preceding claims in which the second connector means (46) is of a size which prevents the second connector means (46) from passing into the conduit means (34) from the second end (48) of the conduit means (34).

11. A feeder (30) according to any one of the preceding claims in which the second connector means (46) is a ring.

12. A feeder (30) according to any one of the preceding claims in which the second end (48) of the conduit means (34) is provided with an external reinforcing formation (84).

13. A feeder (30) according to claim 12 in which the external reinforcing formation (84) is an external collar.

14. A feeder (30) according to any one of the preceding claims in which the length of the elastic material (36) is a length of hollow elastic material, or a length of solid elastic material.

15. A feeder (30) according to claim 14 in which the length of the hollow elastic material is filled with a liquid, or is unfilled.

## Patentansprüche

1. Abgabevorrichtung (30), um während des Angelns Köder an den Fisch abzugeben, wobei die Abgabevorrichtung (30) einen Abgabekörper (32) zur Aufnahme des Köders, Leitungsführungsmittel (34) auf dem Abgabekörper (32), ein Teilstück aus elastischem Material (36) in den Leitungsführungsmitteln (34), erste Verbindungsmittel (38), die an einem ersten Ende (40) der Leitungsführungsmittel (34) positioniert sind und die dem Zweck dienen, ein erstes Ende (42) des Teilstücks aus elastischem Material (36) an eine Angelrollschnur (44) auf einer Rolle anzuschließen, und zweite Verbindungsmittel (46), die an einem zweiten Ende (48) der Leitungsführungsmittel (34) positioniert sind und die dem Zweck dienen, ein zweites Ende (50) des Teilstücks aus elastischem Material (36) an eine Hakenschnur (52) an einem Haken (54) anzuschließen, umfasst, und wobei die Abgabevorrichtung (30) **dadurch gekennzeichnet ist, dass**:
(i) die ersten Verbindungsmittel (38) innerhalb des ersten Endes (40) der Leitungsführungsmittel (34) angeordnet sind und von den Leitungsführungsmitteln (34) durch das erste Ende (40) der Leitungsführungsmittel (34) nicht entfernbar sind;
(ii) die ersten Verbindungsmittel (38) von den Leitungsführungsmitteln (34) durch das zweite Ende (48) der Leitungsführungsmittel (34) entfernbar sind; und
(iii) die ersten Verbindungsmittel (38) sich von dem Innern des ersten Endes (40) der Leitungsführungsmittel (34) bis über das erste Ende (40) der Leitungsführungsmittel (34) hinaus erstrecken.

2. Abgabevorrichtung (30) nach Anspruch 1, wobei die ersten. Verbindungsmittel (38) einen ersten Verbindungsabschnitt (58), der innerhalb des ersten Endes (40) der Leitungsführungsmittel (34) angeordnet ist, und einen zweiten Verbindungsabschnitt (60), der außerhalb des ersten Endes (40) der Leitungsführungsmittel (34) angeordnet ist, wobei der zweite Verbindungsabschnitt (60) an die Angelrollschnur (44) angeschlossen ist; wobei der erste Verbindungsabschnitt (58) an das erste Ende (42) des Teilstücks aus elastischem Material (36) angeschlossen ist; und wobei das erste Ende (40) der Leitungsführungsmittel (34) eine Begrenzungsanordnung (62) enthält, um zu verhindern, dass der erste Verbindungsabschnitt (58) durch das erste Ende (40) der Leitungsführungsmittel (34) hindurchgezogen wird.

3. Abgabevorrichtung (30) nach Anspruch 2, wobei die Begrenzungsanordnung (62) ein internes Anschlagmittel ist.

4. Abgabevorrichtung (30) nach Anspruch 3, wobei das Anschlagmittel ein interner Kranz ist.

5. Abgabevorrichtung (30) nach Anspruch 2, wobei die Begrenzungsanordnung (62) eine nach innen gerichtete Wandanordnung des ersten Endes (40) der Leitungsführungsmittel (34) ist.

6. Abgabevorrichtung (30) nach einem der Ansprüche 2 bis 5, wobei der erste Verbindungsabschnitt (58) ein Ringabschnitt ist.

7. Abgabevorrichtung (30) nach einem der Ansprüche 2 bis 6, wobei der zweite Verbindungsabschnitt (60) ein genuteter Abschnitt ist.

8. Abgabevorrichtung (30) nach einem der vorhergehenden Ansprüche, wobei die Leitungsführungsmittel (34) ein Rohr bilden, das sich in Längsrichtung des Abgabekörpers (32) erstreckt.

9. Abgabevorrichtung (30) nach Anspruch 8, wobei das Rohr auf dem Abgabekörper (32) verschiebbar befestigt ist, derart, dass das Rohr von dem Abgabekörper (32) abgenommen werden kann.

10. Abgabevorrichtung (30) nach einem der vorhergehenden Ansprüche, wobei die zweiten Verbindungsmittel (46) von einer Größe sind, die verhindert, dass die zweiten Verbindungsmittel (46) von dem zweiten Ende (48) der Leitungsführungsmittel (34) in die Leitungsführungsmittel (34) verlaufen.

11. Abgabevorrichtung (30) nach einem der vorhergehenden Ansprüche, wobei die zweiten Verbindungsmittel (46) aus einem Ring bestehen.

12. Abgabevorrichtung (30) nach einem der vorhergehenden Ansprüche, wobei das zweite Ende (48) der Leitungsführungsmittel (34) mit einer äußeren Verstärkungsanordnung (84) versehen ist.

13. Abgabevorrichtung (30) nach Anspruch 12, wobei die äußere Verstärkungsanordnung (84) aus einem äußeren Bund besteht.

14. Abgabevorrichtung (30) nach einem der vorhergehenden Ansprüche, wobei das Teilstück des elastischen Materials (36) ein Teilstück aus einem hohlen elastischen Material oder ein Teilstück aus einem massiven elastischen Material ist.

15. Abgabevorrichtung (30) nach Anspruch 14, wobei das Teilstück des hohlen elastischen Materials mit einer Flüssigkeit gefüllt oder nicht gefüllt ist.

## Revendications

1. Dispositif d'alimentation (30) d'appâts pour poissons pendant la pêche, ledit dispositif d'alimentation (30) comprenant un corps de dispositif d'alimentation (32) pour recevoir l'appât, des moyens de conduit (34) sur le corps de dispositif d'alimentation (32), une longueur de matériau élastique (36) dans les moyens de conduit (34), des premiers moyens de connecteur (38) qui sont positionnés à une première extrémité (40) des moyens de conduit (34) et qui servent à connecter une première extrémité (42) de la longueur de matériau élastique (36) à un fil de bobine (44) sur une bobine, et des deuxièmes moyens de connecteur (46) qui sont positionnés à une deuxième extrémité (48) des moyens de conduit (34) et qui servent à connecter une deuxième extrémité (50) de la longueur de matériau élastique (36) à une ligne d'hameçon (52) sur un hameçon (54), et le dispositif d'alimentation (30) étant **caractérisé en ce que**:
(i) les premiers moyens de connecteur (38) sont situés à l'intérieur de la première extrémité (40) des moyens de conduit (34) et ne peuvent pas être enlevés des moyens de conduit (34) à travers la première extrémité (40) des moyens de conduit (34);
(ii) les premiers moyens de connecteur (38) peuvent être enlevés des moyens de conduit (34) à travers la deuxième extrémité (48) des moyens de conduit (34); et
(iii) les premiers moyens de connecteur (38) s'étendent à partir de l'intérieur de la première extrémité (40) des moyens de conduit (34) jusqu'au-delà de la première extrémité (40) des moyens de conduit (34).

2. Dispositif d'alimentation (30) selon la revendication 1, dans lequel les premiers moyens de connecteur (38) comprennent une première partie de connecteur (58) qui est située à l'intérieur de la première extrémité (40) des moyens de conduit (34), et une deuxième partie de connecteur (60) qui est située à l'extérieur de la première extrémité (40) des moyens de conduit (34); dans lequel la deuxième partie de connecteur (60) est connectée à la ligne de bobine (44); dans lequel la première partie de connecteur (58) est connectée à la première extrémité (42) de la longueur de matériau élastique (36); et dans lequel la première extrémité (40) des moyens de conduit (34) comprend une formation de restriction (62) qui empêche la première partie de connecteur (58) d'être tirée à travers la première extrémité (40) des moyens de conduit (34).

3. Dispositif d'alimentation (30) selon la revendication 2, dans lequel la formation de restriction (62) est un moyen de butée interne.

4. Dispositif d'alimentation (30) selon la revendication 3, dans lequel le moyen de butée interne est un collier interne.

5. Dispositif d'alimentation (30) selon la revendication 2, dans lequel la formation de restriction (62) est une formation de paroi orientée vers l'intérieur de la première extrémité (40) des moyens de conduit (34).

6. Dispositif d'alimentation (30) selon l'une quelconque des revendications 2 à 5, dans lequel la première partie de connecteur (58) est une partie annulaire.

7. Dispositif d'alimentation (30) selon l'une quelconque des revendications 2 à 6, dans lequel la deuxième partie de connecteur (60) est une partie fendue.

8. Dispositif d'alimentation (30) selon l'une quelconque des revendications précédentes, dans lequel les moyens de conduit (34) sont un tube qui s'étend de façon longitudinale le long du corps de dispositif d'alimentation (32).

9. Dispositif d'alimentation (30) selon la revendication 8, dans lequel le tube est monté de façon coulissante sur le corps de dispositif d'alimentation (32) de telle sorte que le tube puisse être enlevé du corps de dispositif d'alimentation (32).

10. Dispositif d'alimentation (30) selon l'une quelconque des revendications précédentes, dans lequel les deuxièmes moyens de connecteur (46) ont une taille qui empêche les deuxièmes moyens de connecteur (46) de passer dans les moyens de conduit (34) à partir de la deuxième extrémité (48) des moyens de conduit (34).

11. Dispositif d'alimentation (30) selon l'une quelconque des revendications précédentes, dans lequel les deuxièmes moyens de connecteur (46) sont un anneau.

12. Dispositif d'alimentation (30) selon l'une quelconque des revendications précédentes, dans lequel la deuxième extrémité (48) des moyens de conduit (34) présente une formation de renforcement externe (84).

13. Dispositif d'alimentation (30) selon la revendication 12, dans lequel la formation de renforcement externe (84) est un collier externe.

14. Dispositif d'alimentation (30) selon l'une quelconque des revendications précédentes, dans lequel la longueur du matériau élastique (36) est une longueur de matériau élastique creux, ou une longueur de matériau élastique plein.

15. Dispositif d'alimentation (30) selon la revendication 14, dans lequel la longueur du matériau élastique creux est remplie avec un liquide ou n'est pas remplie.
